# EUROPEAN PATENT APPLICATION

(11) **EP 4 733 769 A1**
(43) Date of publication of application: **29.04.2026**
(21) Application number: 24825562.2
(22) Date of filing: 18.04.2024
(51) Int. Cl.: G01N 35/10

(54) **AUTOMATIC ANALYSIS DEVICE**

(30) Priority: 22.06.2023 JP 2023102511
(71) Applicant: HITACHI HIGH-TECH CORPORATION, Tokyo 105-6409 (JP)
(72) Inventor: ETOH Jun, Tokyo 100-8280 (JP); SUZUKI Yoichiro, Tokyo 105-6409 (JP); NAKAJIMA Satoshi, Tokyo 105-6409 (JP); OCHI Manabu, Tokyo 100-8280 (JP)
(74) Representative: Strehl & Partner mbB
(86) International application number: PCT/JP2024/015367
(87) International publication number: WO 2024/262152

(57) **Abstract**

In order to provide an automatic analyzer that can stably monitor, with high accuracy, a dispensing amount of a minute amount of liquid to be dispensed to the automatic analyzer, the invention includes a dispensing mechanism including a dispensing probe that dispenses a liquid, a reaction vessel into which the liquid is dispensed, and an automatic analyzer that measures an optical property of the liquid to analyze a reaction liquid. The automatic analyzer includes an imaging device 201 located at a place where a state in which a probe 113 discharges a liquid 1000 to a reaction cell 104 can be observed, an image processing unit 211 that extracts shape and contour information on the liquid using an image acquired by the imaging device 201, a storage unit 220 that stores information in which the image processing unit 211 and a measurement result of the optical property are associated with each other, and a calculation unit 212 that measures a liquid amount of the liquid using the image processing unit 211 and the storage unit 220.

## Description

### Technical Field

The present invention relates to an automatic analyzer that performs qualitative and quantitative analysis of a biological sample such as blood or urine contained in a sample container, and particularly to an automatic analyzer that can verify whether analysis has been performed without abnormality.

### Background Art

An automatic analyzer, for example, a biochemical automatic analyzer, performs qualitative and quantitative analysis of a biological sample (hereinafter referred to as a "sample") such as serum or urine. In such a biochemical automatic analyzer, generally, analysis is performed by dispensing a predetermined amount of a sample or a reagent into a reaction vessel using a dispensing probe to cause a reaction, and optically measuring a change in color tone or turbidity generated in a reaction liquid by a photometric unit such as a spectrophotometer.

In order to obtain an accurate analysis result, it is essential to accurately dispense a preset amount from each container to the reaction vessel. Therefore, it has been proposed to provide a device that can confirm that dispensing into a reaction vessel is normally performed using various sensors.

For example, PTL 1 discloses that "provided are a dispensing device that dispenses a liquid to be dispensed by inserting a dispensing probe into a container containing the liquid to be dispensed to aspirate the liquid and then inserting the dispensing probe into a reaction vessel to discharge the liquid, an imaging device that captures an image of a position where the liquid is discharged from a tip of the dispensing probe to the reaction vessel, and a background portion that faces the imaging device with the reaction vessel interposed therebetween and has a bright portion extending vertically at least in a central portion of a region imaged by the imaging device and a dark portion disposed on at least one lateral side of the bright portion and having lower brightness than the bright portion".

PTL 2 discloses "an automatic analyzer for reacting a sample with a reagent and measuring an optical property of a reaction liquid to analyze the reaction liquid, the automatic analyzer including: a monitor vessel that includes a holding portion formed of a wall surface subjected to a non-affinity treatment against a liquid to be dispensed and holds the liquid in a substantially spherical shape by the holding portion; and a liquid amount calculation unit that captures an image of a shape of the liquid held by the holding portion and calculates a liquid amount of the liquid based on the captured shape of the liquid".

### Citation List

### Patent Literature

PTL 1: JP2017-9532A
PTL 2: JP2009-156793A

### Summary of Invention

### Technical Problem

However, in a method disclosed in PTL 1, since the image is captured after the liquid is dispensed into the reaction vessel, when an amount of the liquid in the reaction vessel is minute, a shape of the liquid cannot be observed and a liquid amount may be misread.

In a method disclosed in PTL 2, since the liquid adhering to the inside of the holding portion maintains the substantially spherical shape due to the non-affinity treatment performed on the holding portion, it is difficult for the liquid in the holding portion to maintain the substantially spherical shape when the non-affinity treatment of the holding portion deteriorates. Therefore, it is required to monitor whether the non-affinity treatment of the holding portion is sufficiently performed.

When the monitor vessel is moved to a position where the image of the liquid is captured after the liquid is dispensed into the monitor vessel, the liquid in the holding portion also moves due to vibration of the monitor vessel or the like, and it is difficult for the liquid to maintain the substantially spherical shape. When the liquid amount of the liquid that cannot maintain the substantially spherical shape is calculated only based on the captured image, the liquid amount may be misread.

An object of the invention is to provide an automatic analyzer that can verify a liquid dispensing amount and improve analysis reliability.

### Solution to Problem

A configuration of the invention for achieving the above object is as follows.

An automatic analyzer includes: a dispensing probe configured to dispense a predetermined amount of liquid; a reaction vessel to which the liquid from the dispensing probe is dispensed; an analysis mechanism configured to analyze a component of the liquid in the reaction vessel; a dispensing detection unit configured to detect a contact state between the reaction vessel and the liquid dispensed into the reaction vessel from the dispensing probe; an imaging device configured to capture images of the contact state; an image processing unit configured to select an image for determining an amount of the liquid dispensed into the reaction vessel from the images captured by the imaging device based on information from the dispensing detection unit and extract a feature of the liquid from the selected image; a storage unit configured to store a database in which the feature of the liquid and information on a component amount of the liquid analyzed by the analysis mechanism are associated with each other; and a liquid amount calculation unit configured to calculate the amount of the liquid dispensed by the dispensing mechanism from the extracted feature based on the database stored in the storage unit.

### Advantageous Effects of Invention

According to the invention, it is possible to provide an automatic analyzer that can verify a liquid dispensing amount and improve analysis reliability.

### Brief Description of Drawings

[FIG. 1] FIG. 1 is a schematic configuration diagram of an automatic analyzer according to an embodiment of the invention.
[FIG. 2] FIG. 2 is a diagram showing a configuration of a dispensing device in an automatic analyzer according to a first embodiment of the invention.
[FIG. 3] FIG. 3 is a diagram showing a configuration of a dispensing liquid amount measuring device in the automatic analyzer according to the first embodiment of the invention.
[FIG. 4] FIG. 4 is a diagram showing a configuration of a measurement unit in the automatic analyzer according to the first embodiment of the invention.
[FIG. 5] FIG. 5 is a flowchart showing liquid amount measurement calibration processing according to the first embodiment of the invention.
[FIG. 6] FIG. 6 is a diagram showing an example of an image captured by an imaging device according to the first embodiment of the invention.
[FIG. 7] FIG. 7 is a diagram regarding selection of an image to be a target of liquid feature extraction according to the first embodiment of the invention.
[FIG. 8] FIG. 8 is a diagram regarding a relationship between an absorbance and a liquid amount according to the first embodiment of the invention.
[FIG. 9] FIG. 9 is a diagram showing an example of liquid amount reference data stored in a storage unit according to the first embodiment of the invention.
[FIG. 10] FIG. 10 is a flowchart showing liquid amount measurement processing according to the first embodiment of the invention.
[FIG. 11] FIG. 11 is a flowchart showing processing for selecting an image to be a target of liquid feature extraction according to a second embodiment of the invention.

### Description of Embodiments

Hereinafter, embodiments of the invention will be described with reference to the drawings. The following description shows a specific example of contents of the invention, the invention is not limited to the description, and various changes and modifications can be made by those skilled in the art within the scope of the technical idea disclosed in the description. In addition, in all the drawings for showing the invention, components having the same functions are denoted by the same reference signs, and repeated descriptions thereof may be omitted.

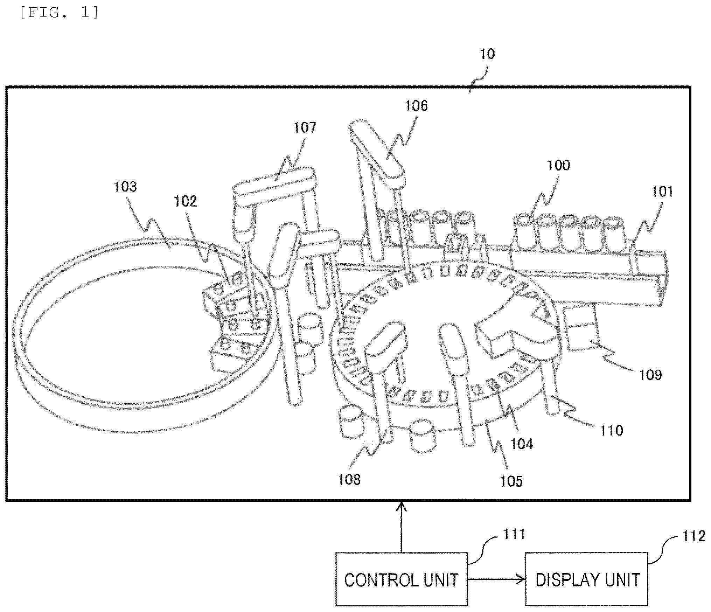

FIG. 1 is a schematic configuration diagram of an automatic analyzer according to an embodiment. An automatic analyzer 10 is an apparatus for performing component analysis by measuring a reaction liquid in which a sample and a reagent are chemically reacted in a reaction cell 104.

As main components, the automatic analyzer 10 includes sample containers 100, a sample rack 101, reagent containers 102, a reagent disk 103, reaction cells 104, a reaction disk 105, a sample dispensing mechanism 106, a reagent dispensing mechanism 107, a stirring unit 108, a measurement unit 109, a cleaning unit 110, a control unit 111, and a display unit 112.

The reaction cells 104 are circumferentially arranged on the reaction disk 105. Each reaction cell 104 is a container for storing a mixed liquid obtained by mixing the sample and the reagent, and a plurality of the reaction cells 104 are arranged on the reaction disk 105. The sample rack 101 where a plurality of sample containers 100 containing the sample are mounted is disposed in the vicinity of the reaction disk 105.

The sample dispensing mechanism 106 that is rotatable and vertically movable is disposed between the reaction disk 105 and each sample container 100. The sample dispensing mechanism 106 horizontally moves in an arc around a rotation axis and vertically moves to dispense the sample from each sample container 100 to each reaction cell 104.

The reagent disk 103 is a storage unit where a plurality of reagent containers 102 containing the reagent therein can be placed on a circumference. The reagent disk 103 is kept cool.

A reagent dispensing mechanism 107 that is rotatable and movable vertically is provided between the reaction disk 105 and the reagent disk 103. The reagent dispensing mechanism 107 moves vertically and horizontally to dispense, into the reaction cell 104, the reagent, a detergent, a diluent, a pretreatment reagent, and the like aspirated from the reagent container 102, a diluent bottle, a pretreatment reagent container, and the like.

Around the reaction disk 105, the cleaning unit 110 for cleaning the inside of the reaction cell 104, the measurement unit 109 for irradiating the reaction liquid in the reaction cell 104 with light to measure an absorbance of the light transmitted therethrough, the stirring unit 108 for mixing the sample and the reagent dispensed into the reaction cell 104, and the like are arranged.

Each mechanism is connected to the control unit 111, an operation thereof is controlled by the control unit 111, and component amount analysis of the reaction liquid is performed. The control unit 111 is connected to the storage unit 220 and stores parameters for controlling each mechanism described above in the automatic analyzer, a position for each sequence, absorbance data that is a measurement result from the measurement unit 109, and the like.

Test sample analysis processing by the above-described automatic analyzer 10 is executed in the following order. First, the sample in the sample container 100 placed on the sample rack 101 conveyed to the vicinity of the reaction disk 105 is dispensed to the reaction cell 104 on the reaction disk 105 by the sample dispensing mechanism 106. Next, the reagent to be used for analysis is dispensed by the reagent dispensing mechanism 107 from the reagent container 102 on the reagent disk 103 into the reaction cell 104 into which the sample is previously dispensed.

Subsequently, a mixed liquid of the sample and the reagent in the reaction cell 104 is stirred by the stirring unit 108.

Thereafter, light generated from a light source is transmitted through the reaction cell 104 containing the mixed liquid, and an absorbance of the transmitted light is measured by the measurement unit 109. Based on the absorbance of the reaction liquid measured by the measurement unit 109, the control unit 111 analyzes a component amount based on calibration curve data and the Lambert-Beer law. Although an automatic analyzer that obtains a concentration of a predetermined component using the measurement unit 109 will be described as an example, techniques disclosed in the embodiments described later may be used for an immunoassay automatic analyzer or a coagulation automatic analyzer that measures the sample using other optical methods.

### [First Embodiment]

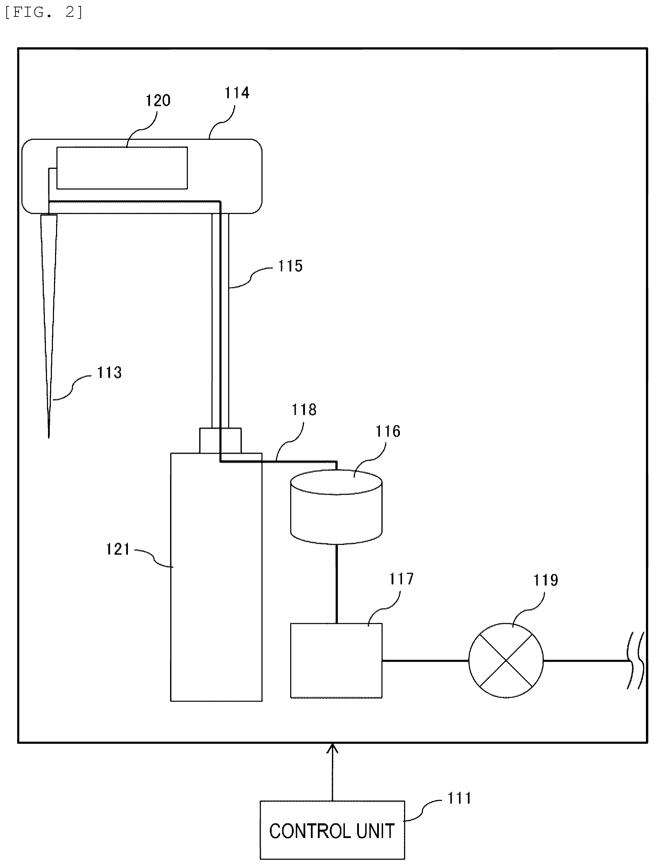

FIG. 2 is a configuration diagram of a dispensing device according to a first embodiment. This dispensing device can be applied to both the sample dispensing mechanism 106 and the reagent dispensing mechanism 107 in FIG. 1. An arm 114 that holds a probe 113 and is rotationally drivable is provided on a shaft 115 that is drivable vertically. The probe 113, a pressure sensor 116, and a syringe pump 117 are coupled via a pipe 118. Such a dispensing flow path is configured such that a tip side is opened by the probe 113 and a base side can be opened and closed by an electromagnetic valve 119.

A liquid surface detection sensor 120 is connected to the probe 113. When the liquid is dispensed, a tip of the probe 113 is immersed in the sample or the reagent based on a signal of the liquid surface detection sensor 120, the electromagnetic valve 119 is closed, and the liquid (sample or reagent) is aspirated and discharged by the syringe pump 117.

After completion of the dispensing operation, the electromagnetic valve 119 is opened from the base side to supply cleaning water. The control unit 111 controls sensor signal reception and motor drive signal transmission. The liquid surface detection sensor 120 generally determines whether the probe 113 has come into contact with the liquid in the container based on a change in electrostatic capacitance.

That is, since the probe 113 and the container form a pseudo capacitor, when the probe 113 is located above the container, electrostatic capacitance of air corresponds to a distance therebetween, and when the probe 113 comes into contact with the liquid in the container, the electrostatic capacitance changes to electrostatic capacitance of the liquid (a value thereof is smaller than the electrostatic capacitance of the air). Based on the change in the electrostatic capacitance, it is determined whether the probe 113 has come into contact with a liquid surface in the container.

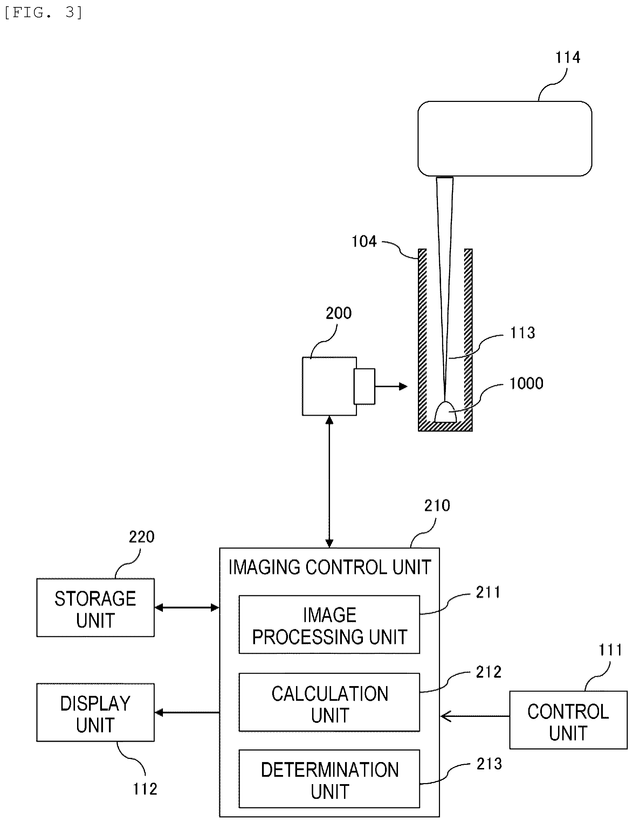

FIG. 3 is a configuration diagram of a dispensing liquid amount measuring device of the dispensing device in the first embodiment. A dispensing liquid amount calculation unit 200 is a unit that measures a liquid amount of a liquid 1000 discharged from the dispensing probe 113 to the reaction cell 104.

The dispensing liquid amount calculation unit 200 includes an imaging device 201 and an imaging control unit 210. The imaging device 201 is disposed at a position where the vicinity of a bottom surface of the reaction cell 104 can be observed. For example, the bottom surface of the reaction cell 104 can be observed by disposing the imaging device 201 on a side surface, below, or above the reaction cell 104. However, in order to observe the vicinity of the bottom surface of the reaction cell 104 from the side surface of the reaction cell 104 and from below, the reaction disk 105 is required to be processed.

The imaging control unit 210 is a control unit using an ECU or the like that controls imaging of the liquid 1000 by the imaging device 201 and processes an image signal of the imaged liquid. The image processing unit 211 processes the image signal captured by the imaging device 201 and outputs a feature of the liquid 1000.

The feature refers to information such as a shape and a contour of the liquid. A calculation unit 212 calculates the liquid amount of liquid based on the shape of the liquid 1000 obtained by processing by the image processing unit 211. The determination unit 213 determines whether the liquid amount of the liquid 1000 calculated by the calculation unit 212 is an abnormal value relative to a dispensing amount set by the control unit 111. The feature of the liquid acquired by the image processing unit 211, the liquid amount of the liquid calculated by the calculation unit 212, and a result of the determination unit 213 are displayed on the display unit 112 via the control unit 111.

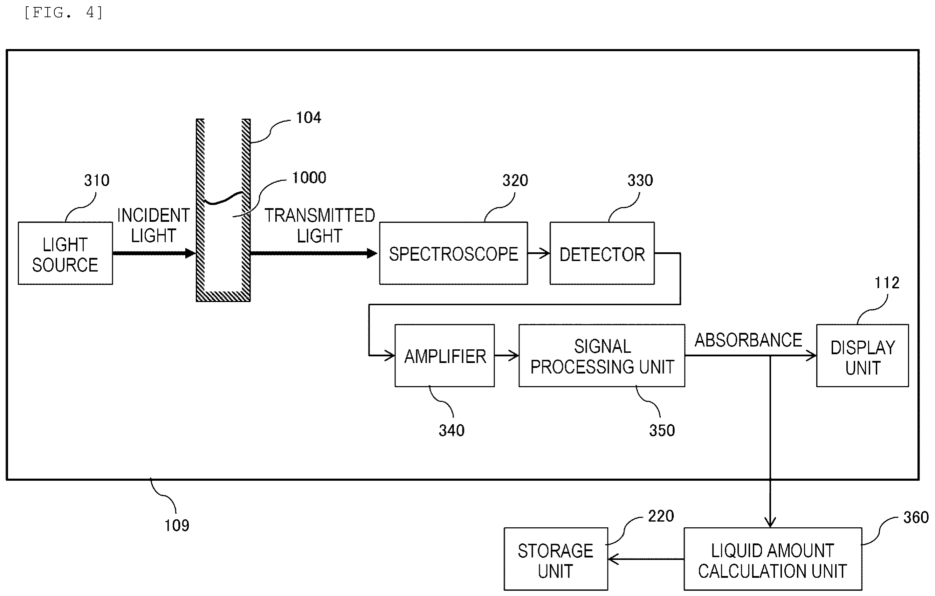

FIG. 4 is a configuration diagram of the measurement unit 109 of the automatic analyzer according to the first embodiment. The measurement unit 109 includes a light source 310, a spectroscope 320, a detection unit 330, an amplifier 340, and a signal processing unit 350.

At the time of analysis, transmitted light 312, which is incident light 311 emitted from the light source lamp 310 and transmitted through the liquid 1000 stored in the reaction cell 104, is separated into each wavelength by the spectroscope 320 and converted into a current corresponding to an intensity of the light received by the detection unit 330 for each wavelength, and the weak current signal is amplified by the amplifier 340 into a voltage signal that is easy to handle, then subjected to processing such as correction by the signal processing unit 350, and is output as a final absorbance.

Result data of the output absorbance is displayed on the display unit 112. The output absorbance is used for the dispensing device to calculate the amount of the dispensed liquid using a liquid amount calculation unit 360. The calculated liquid amount is stored in the storage unit 220.

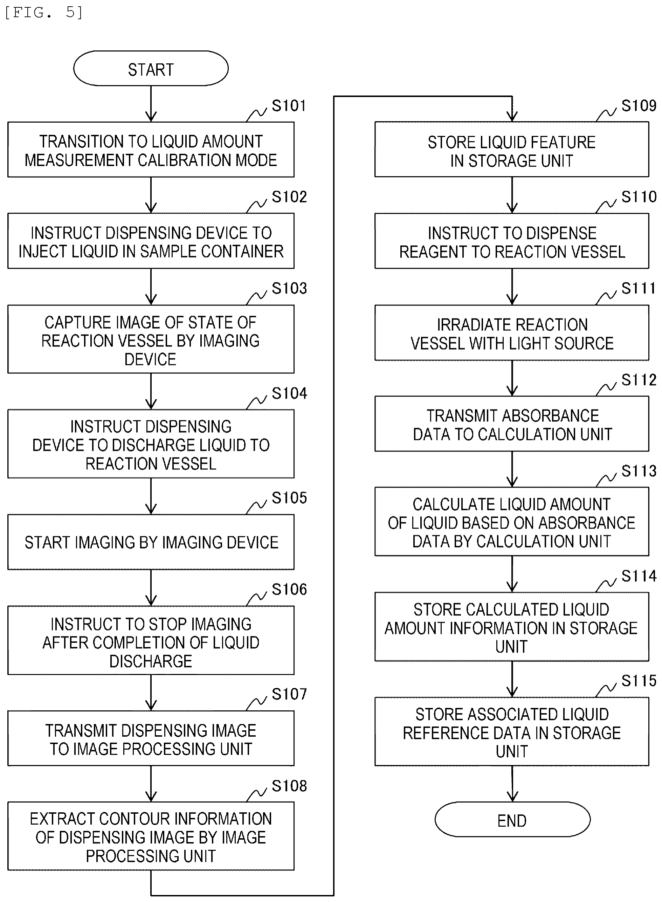

FIG. 5 is a flowchart showing liquid amount measurement calibration processing according to the first embodiment. This is processing performed before the apparatus is operated, and data measured in the processing is stored in the storage unit 220. When the apparatus is operated, the liquid amount is measured based on the data stored in the processing.

According to this figure, the processing is started when the control unit 111 instructs the dispensing device to dispense the sample from the sample container 100 to the reaction cell 104.

Immediately after the processing is started, a mode transitions to a liquid amount measurement calibration mode (step S101).

In step S102, the control unit 111 operates the sample dispensing mechanism 106 to move to the sample container 100 and instructs the probe 113 to aspirate (inject) the liquid stored in the sample container 100.

In step S103, the control unit 111 instructs the imaging device 201 to capture an image of a state of the reaction cell 104. This is an image for checking the reaction cell 104 before the sample dispensing mechanism 106 discharges the liquid 1000 to the reaction cell 104, and it is checked whether there is any adhered substance such as a contaminant in the reaction cell 104.

In step S104, the control unit 111 operates the sample dispensing mechanism 106 to move from the sample container 100 to the reaction cell 104. Then, an instruction is issued to discharge the liquid from the probe 113 to the reaction cell 104. Here, an amount of liquid discharged from the sample container 100 to the reaction cell 104 is on the order of several µL, which is a minute amount.

In step S105, the control unit 111 instructs the imaging device 201 to capture an image of a state in which the probe 113 discharges the liquid 1000 to the reaction cell 104. Here, a timing when the imaging device 201 starts imaging is determined based on a state of the sample dispensing mechanism 106.

For example, imaging is started using a value of the pressure sensor 116 as a trigger. The imaging device 201 continues imaging until the sample dispensing mechanism 106 completes the operation of discharging the liquid to the reaction cell 104.

In step S106, upon completion of the discharge operation of the liquid 1000, the control unit 111 instructs the imaging device 201 to stop imaging.

In step S107, images captured by the imaging device 201 are transmitted to the image processing unit.

In step S108, the image processing unit 211 selects, from the captured images, an image from which the feature is to be extracted, and acquires the feature of the liquid based on the selected image. The feature refers to information such as the shape and the contour of the liquid. The shape of the liquid indicates, for example, information on where the liquid is discharged in the reaction cell 104 in addition to the shape of the liquid. The contour information indicates, for example, when the shape of the discharged liquid is a half of an ellipsoid of revolution, a major radius and a minor radius of the liquid adhering to the bottom surface of the reaction cell 104, and a height of the liquid from the bottom surface of the reaction cell 104.

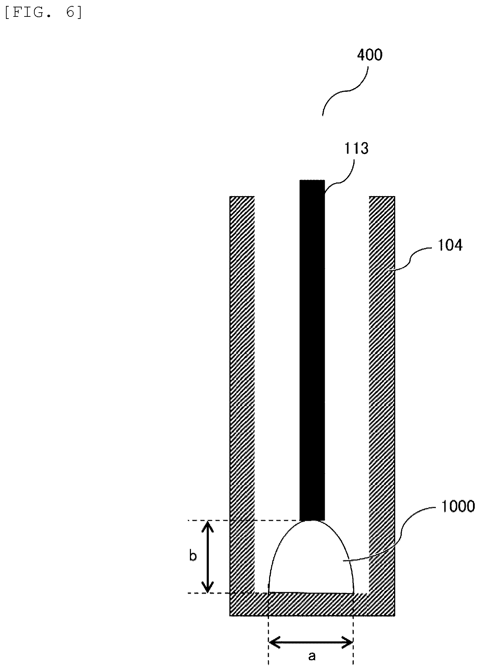

FIG. 6 is a diagram showing an example of the image acquired by the imaging device 201. In the embodiment, an image 400 obtained by capturing an image of only a side surface of the reaction cell 104 by the imaging device 201 will be described.

When only the image of the side surface of the reaction cell 104 is captured by the imaging device 201, main information that can be acquired as the feature of the liquid is information indicating where the liquid 1000 is discharged in the reaction cell 104 and height information on the liquid 1000 from the bottom surface of the reaction cell 104.

For example, the image 400 can acquire information indicating that the liquid 1000 is in contact with only the bottom surface of the reaction cell 104 and is not in contact with the side surface, and information indicating a length a of the liquid adhering to the bottom surface of the reaction cell 104 and a height b of the liquid 1000 from the bottom surface of the reaction cell 104.

Here, by using an image immediately before the probe 113 is separated from the liquid 1000 as a dispensing image for acquiring the feature of the liquid, the feature of the liquid can be stably acquired.

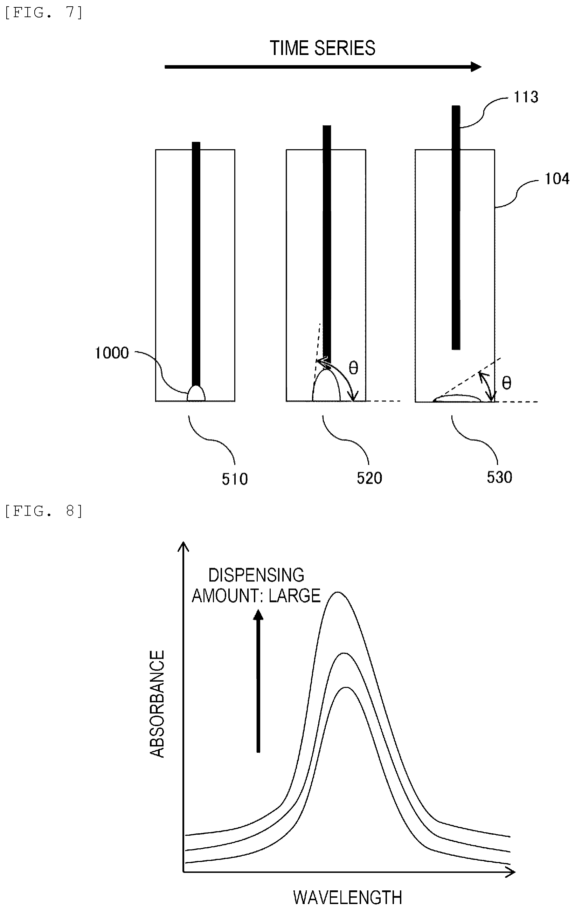

FIG. 7 is a diagram showing an example of images acquired by the imaging device 201 in a chronological order. In the embodiment, an example in which images of the side surface of the reaction cell 104 are captured by the imaging device 201 will be described. In an image 510 during the discharge of the liquid 1000 in the reaction cell 104, since the liquid 1000 still remains in the probe 113, it is impossible to measure a final amount of the liquid 1000 in the reaction cell 104.

On the other hand, in an image 530 after the discharge of the liquid 1000 into the reaction cell 104 is completed and the probe 113 is separated from the liquid 1000, since the liquid 1000 wets the bottom surface of the reaction cell 104 and spreads thereon, a contact angle θ of the liquid is small, and it is difficult to acquire the shape and contour information on the liquid.

In contrast, in an image 520 in which the discharge of the liquid 1000 into the reaction cell 104 is completed and the probe 113 is not separated from the liquid 1000, since the contact angle θ is large, it is easy to acquire the shape and contour information on the liquid.

The image 520 in which the discharge of the liquid 1000 into the reaction cell 104 is completed and the probe 113 is not separated from the liquid 1000 can be acquired by determining that the discharge of the liquid 1000 into the reaction cell 104 is completed based on the value of the pressure sensor 116 in the sample dispensing mechanism 106 and using a first image in which the probe 113 and the liquid 1000 are separated from each other as a trigger to adopt an immediately preceding image as the image for acquiring the feature of the liquid from the images acquired by the imaging device 201 by the control unit 111.

In step S109, the feature of the liquid acquired by the image processing unit 211 is stored in the storage unit 220.

In step S110, the control unit 111 operates the reagent dispensing mechanism 107 to dispense, to the reaction cell 104, the liquid stored in the reagent container 102 on the reagent disk 103.

In step S111, the control unit 111 operates the measurement unit 109 to irradiate, with the light source, the reaction cell 104 into which the liquid in the sample container 100 and the liquid in the reagent container 102 are dispensed.

In step S112, the control unit 111 operates the measurement unit 109 to transmit, to the calculation unit, the absorbance data output from the signal processing unit 350.

In step S113, the liquid amount calculation unit 360 calculates the liquid amount of the liquid in the sample container 100 dispensed into the reaction cell 104 based on the absorbance data obtained from the measurement unit 109.

FIG. 8 shows an example of the absorbance data output from the signal processing unit 350. When contents in the reaction cell 104 are the same, a wavelength at which a peak of the absorbance occurs is also the same.

In the embodiment, since the absorbance indicates a concentration of a predetermined component, when the amount of the liquid in the sample container 100 is measured, if an amount of the reagent dispensed from the reagent container 102 into the reaction cell 104 is a constant value, a concentration of the component to be measured in the liquid increases depending on the amount of the liquid in the sample container 100. Thus, when the amount of the liquid from the reagent container 102 in the reaction cell 104 is the constant value, the amount of the liquid from the sample container 100 in the reaction cell 104 can be calculated based on magnitude of the peak of the absorbance.

In step S114, liquid amount information on the liquid from the sample container 100 in the reaction cell 104 calculated based on the absorbance data by the calculation unit is stored in the storage unit 220.

In step S115, the feature of the liquid and the liquid amount information stored in the storage unit 220 are associated with each other and stored again in the storage unit as liquid amount reference data.

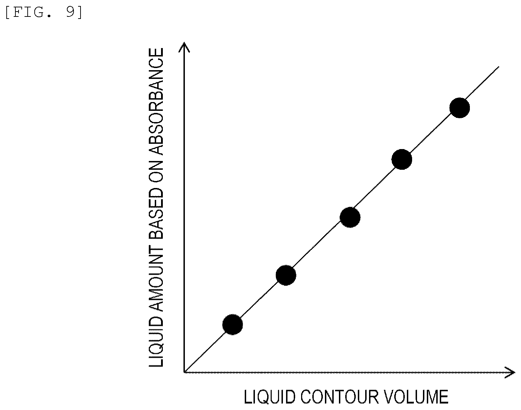

FIG. 9 shows an example of the liquid amount reference data stored in the storage unit. In the embodiment, the image of the side surface of the reaction cell 104 is captured by the imaging device 201, and an adhesion position, the shape, and an area of the contour of the liquid 1000 are targeted as the feature of the liquid.

For example, when the liquid 1000 adheres only to the bottom surface of the reaction cell 104 and has a semi-elliptical shape when viewed from the side surface of the reaction cell 104, an area S (= nab) of the contour can be derived from the length a adhering to the bottom surface of the reaction cell 104 and the height b of the liquid from the bottom surface of the reaction cell 104.

A relationship between the derived area S of the contour and the liquid amount information on the liquid is stored. By repeating this, a relative relationship between the area S of the contour and the liquid amount can be statistically derived. Measurement accuracy increases as the number of samples of the liquid amount reference data increases.

The feature of the liquid acquired by the image processing unit 211 and the liquid amount of the liquid calculated by the calculation unit 212 based on the absorbance data are output to the display unit 112, and the processing ends.

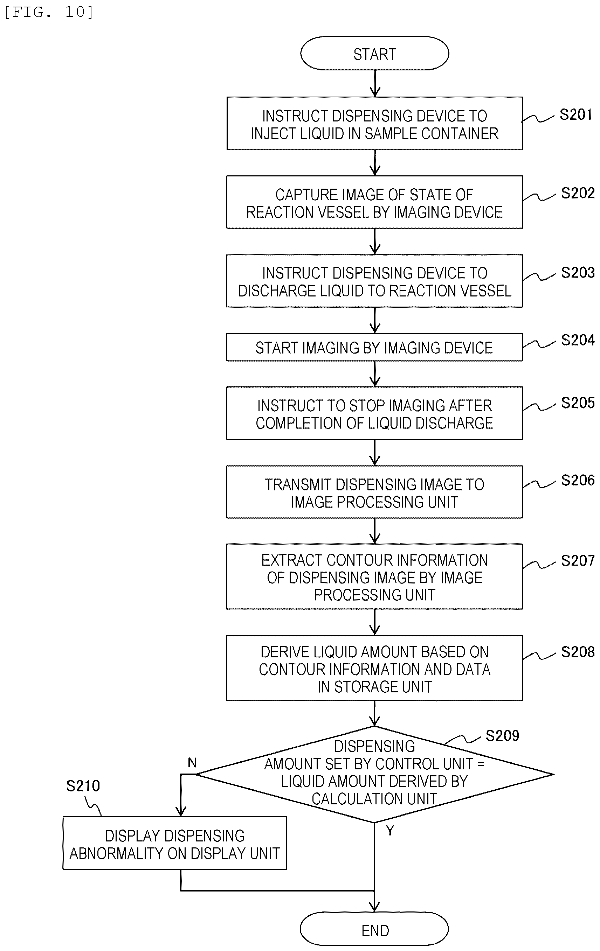

FIG. 10 is a flowchart showing a method for measuring a dispensing liquid amount using the imaging device according to the first embodiment.

Processing is started when the control unit 111 instructs the dispensing device to dispense the sample from the sample container 100 to the reaction cell 104.

In step S201, the control unit 111 operates the sample dispensing mechanism 106 to move to the sample container 100 and instructs injection of the liquid stored in the sample container 100 from the probe 113.

In step S202, the control unit 111 instructs the imaging device 201 to capture an image of a state of the reaction cell 104. This is an image for checking the reaction cell 104 before the sample dispensing mechanism 106 discharges the liquid 1000 to the reaction cell 104, and it is checked whether there is any adhered substance such as a contaminant in the reaction cell 104.

In step S203, the control unit 111 operates the sample dispensing mechanism 106 to move from the sample container 100 to the reaction cell 104. Then, an instruction is issued to discharge the liquid from the probe 113 to the reaction cell 104.

In step S204, the control unit 111 instructs the imaging device 201 to capture an image of a state in which the probe 113 discharges the liquid 1000 to the reaction cell 104. Here, a timing when the imaging device 201 starts imaging is determined based on a state of the sample dispensing mechanism 106.

For example, imaging is started using the value of the pressure sensor 116 as a trigger. The imaging device 201 continues imaging until the sample dispensing mechanism 106 completes the operation of discharging the liquid to the reaction cell 104.

In step S205, upon completion of the discharge operation of the liquid 1000, the control unit 111 instructs the imaging device 201 to stop imaging.

In step S206, images captured by the imaging device 201 are transmitted to the image processing unit.

In step S207, the image processing unit 211 acquires the feature of the liquid based on the captured images. The feature refers to information such as the shape and the contour of the liquid.

The shape of the liquid indicates, for example, information on where the liquid is discharged in the reaction cell 104 in addition to the shape of the liquid. The contour information indicates, for example, when the shape of the discharged liquid is a half of an ellipsoid of revolution, a major radius and a minor radius of the liquid adhering to the bottom surface of the reaction cell 104, and a height of the liquid from the bottom surface of the reaction cell 104.

In step S208, the calculation unit 212 compares the feature of the liquid acquired by the image processing unit 211 with the liquid amount reference data stored in the storage unit 220 and derives the amount of the liquid dispensed from the sample container 100 in the reaction cell 104.

In step S209, the determination unit 213 determines whether the amount of the liquid dispensed from the sample container 100 derived in step S208 is not an abnormal value relative to a dispensing amount instructed to the sample dispensing mechanism 106 by the control unit 111.

When the amount is not an abnormal value, the feature of the liquid acquired by the image processing unit 211, the liquid amount derived by the calculation unit 212, and a result of the determination unit 213 are output to the display unit 112, and the processing ends.

When the amount is an abnormal value, the processing proceeds to step S210.

Step S210 is performed when the determination unit 213 determines that the amount of the liquid dispensed from the sample container 100 derived in step S208 is an abnormal value relative to the dispensing amount instructed to the sample dispensing mechanism 106 by the control unit 111 in step S209.

The display unit 112 notifies that a dispensing abnormality has occurred in the sample dispensing mechanism 106. The feature of the liquid acquired by the image processing unit 211 and the liquid amount of the liquid derived by the calculation unit 212 are output to the display unit 112, and the processing ends.

In this way, by capturing the liquid 1000 discharged into the reaction cell 104 in the image 510 acquired using the imaging device 201 immediately before the probe 113 and the liquid 1000 are separated, extracting the feature such as the shape and contour information of the liquid using the acquired image, and calculating the liquid amount of the dispensed liquid based on the feature and the liquid amount reference data, which is stored in the storage unit 220 in advance and in which the liquid feature and the liquid amount information calculated from the absorbance data are associated with each other, it is possible to stably monitor, with high accuracy, the dispensing amount of the liquid in the reaction cell 104, which has a minute amount on the order of several µL.

Accordingly, the automatic analyzer 10 can ensure and confirm dispensing accuracy, and has high quality and excellent reliability.

### [Second Embodiment]

In the first embodiment, since the dispensing image for acquiring the feature of the liquid is acquired, the image is acquired by the imaging device 201 using the first image in which the probe 113 is separated from the liquid 1000 as the trigger, and the image can also be acquired using the liquid surface detection sensor 120.

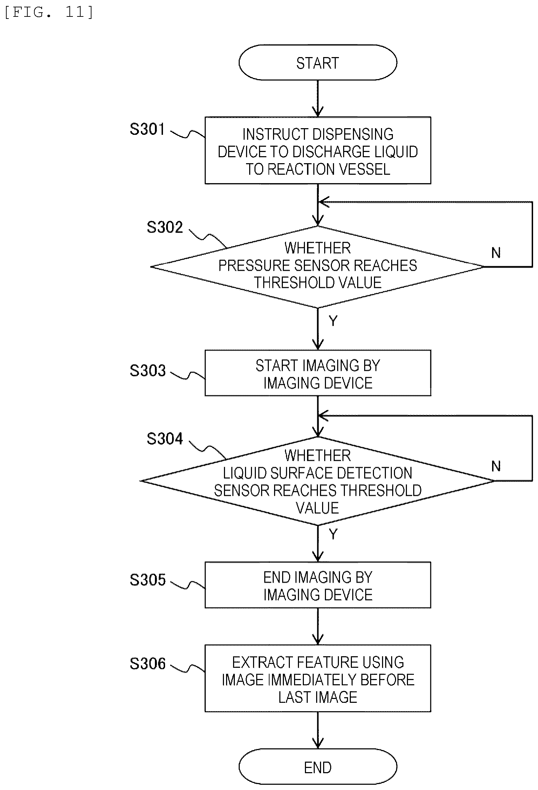

FIG. 11 is a flowchart showing a dispensing image acquisition step using the liquid surface detection sensor 120.

In step S301, the control unit 111 operates the sample dispensing mechanism 106 to move from the sample container 100 to the reaction cell 104. Then, an instruction is issued to discharge the liquid from the probe 113 to the reaction cell 104.

In step S302, it is determined whether the value of the pressure sensor 116 reaches a threshold value. Details of the threshold value will be described later. When the value of the pressure sensor 116 has reached the threshold value, the processing proceeds to step S303, and when the value does not reach the threshold value, the determination is performed again.

In step S303, the control unit 111 instructs the imaging device 201 to start imaging.

In step S304, it is determined whether a value of the liquid surface detection sensor 120 reaches a threshold value.

The value of the liquid surface detection sensor 120 changes when the probe 113 is separated from the liquid 1000. Therefore, by monitoring the value of the liquid surface detection sensor 120, it is possible to determine whether the probe 113 is separated from the liquid 1000. When the value of the liquid surface detection sensor 120 reaches the threshold value, the processing proceeds to step S305, and when the value does not reach the threshold value, the determination is performed again.

In step 305, the control unit 111 instructs the imaging device 201 to stop imaging.

In step 306, the image processing unit 211 acquires the feature of the liquid based on the image immediately before a last image captured by the imaging device 201.

According to the second embodiment, the liquid surface detection sensor 120 already provided in the dispensing mechanism can determine that the probe 113 is separated from the liquid 1000, a load on the image processing unit 211 can be reduced, and a calculation speed can be improved.

### Reference Signs List

- 10: automatic analyzer
- 100: sample container
- 101: sample rack
- 102: reagent container
- 103: reagent disk
- 104: reaction cell
- 105: reaction disk
- 106: sample dispensing mechanism
- 107: reagent dispensing mechanism
- 108: stirring unit
- 109: measurement unit
- 110: cleaning unit
- 111: control unit
- 112: display unit
- 113: probe
- 114: arm
- 115: shaft
- 116: pressure sensor
- 117: syringe pump
- 118: pipe
- 119: electromagnetic valve
- 120: liquid surface detection sensor
- 121: reagent syringe
- 201: imaging device
- 210: imaging control unit
- 211: image processing unit
- 212: calculation unit
- 220: storage unit
- 310: light source
- 320: spectroscope
- 330: detection unit
- 340: amplifier
- 350: signal processing unit
- 360: liquid amount calculation unit
- 400: captured image
- 510: captured image (during discharge)
- 520: captured image (before probe separation)
- 530: captured image (after probe separation)
- θ: contact angle

## Claims

1. An automatic analyzer comprising:
a dispensing probe configured to dispense a predetermined amount of liquid;
a reaction vessel to which the liquid is dispensed from the dispensing probe;
an analysis mechanism configured to analyze a component of the liquid in the reaction vessel;
a dispensing detection unit configured to detect a contact state between the reaction vessel and the liquid dispensed into the reaction vessel from the dispensing probe;
an imaging device configured to capture images of the contact state;
an image processing unit configured to select an image for determining an amount of the liquid dispensed into the reaction vessel from the images captured by the imaging device based on information from the dispensing detection unit and extract a feature of the liquid from the selected image;
a storage unit configured to store a database in which the feature of the liquid and information on a component amount of the liquid analyzed by the analysis mechanism are associated with each other; and
a liquid amount calculation unit configured to calculate the amount of the liquid dispensed by the dispensing mechanism from the extracted feature based on the database stored in the storage unit.

2. The automatic analyzer according to claim 1, wherein
the feature includes at least information on a shape or a contour of the liquid.

3. The automatic analyzer according to claim 1, wherein
the dispensing detection unit is a pressure sensor that detects a pressure in the dispensing probe or a liquid surface sensor that detects contact of the dispensing probe with the liquid in the reaction vessel.

4. The automatic analyzer according to claim 1, wherein
the analysis mechanism is a photometer that measures an absorbance of the liquid in the reaction vessel.

5. The automatic analyzer according to claim 1, wherein
the image selected by the image processing unit is an image immediately before a time point when the dispensing detection unit detects that the dispensing probe is separated from the liquid in the reaction vessel.

6. The automatic analyzer according to any one of claims 1 to 5, further comprising:
a determination unit including a notification unit for notifying of an abnormality of the automatic analyzer when the amount of the liquid calculated by the liquid amount calculation unit is different from a dispensing amount set by a control unit.

7. The automatic analyzer according to any one of claims 1 to 5, wherein
the associated database stored in the storage unit is associated differently for each physical property of the liquid to be dispensed.
